# EUROPEAN PATENT APPLICATION

(11) **EP 2 348 681 A1**
(43) Date of publication of application: **27.07.2011**
(21) Application number: 09821522.1
(22) Date of filing: 16.06.2009
(51) Int. Cl.: H04L 12/56

(54) **STORAGE METHOD AND SYSTEM, TERMINAL SERVICE BOARD, CONTROL BOARD AND STORAGE CHANNEL BOARD**

(30) Priority: 24.10.2008 CN 200810171905
(71) Applicant: Chengdu Huawei Symantec Technologies Co., Ltd., Sichuan 611731 (CN)
(72) Inventor: ZHANG, Wei, Chengdu Sichuan 611731 (CN); LV, Xianhong, Chengdu Sichuan 611731 (CN)
(74) Representative: Barth, Stephan Manuel
(86) International application number: PCT/CN2009/072298
(87) International publication number: WO 2010/045801

(57) **Abstract**

A storage method and system, a terminal service board, a control board, and a storage channel board are provided. The system includes a terminal service board, a control board, and a storage channel board, where the terminal service board is configured to be connected with a terminal and the control board, process a request from the terminal, and send a processing result to the control board; the control board is configured to encapsulate data required to be stored onto a storage apparatus into a command according to the processing result, and submit the command to the storage channel board; the storage channel board is configured to be connected with the storage apparatus and the control board, and according to the command, store onto the storage apparatus the data required to be stored onto the storage apparatus. The control board becomes more focused on the storage processing, so that the efficiency of use for the control board is improved. Furthermore, as the influence of the interface card protocol to the control board is reduced significantly, the design of the control board is simplified.

## Description

The application claims priority to Chinese Patent Application No. 200810171905.x, filed on October 24, 2008, and entitled "STORAGE METHOD AND SYSTEM, TERMINAL SERVICE BOARD, CONTROL BOARD AND STORAGE CHANNEL BOARD", which is incorporated herein by reference in its entirety.

### FIELD OF THE TECHNOLOGY

The present invention relates to the field of communication technologies, and more particularly to a storage method and system, a terminal service board, a control board, and a storage channel board.

### BACKGROUND OF THE INVENTION

With the rapid development of the technology and the wide application of the computer technology, the information on the Internet increases promptly, and E-business develops continually, therefore, the information system of an enterprise occupies the principal status of the competition among enterprises increasingly, so that the amount of data grows fast, and the enterprise is increasingly dependent on data. For better and faster storage of numerous data, the technology of storage also needs to develop constantly.

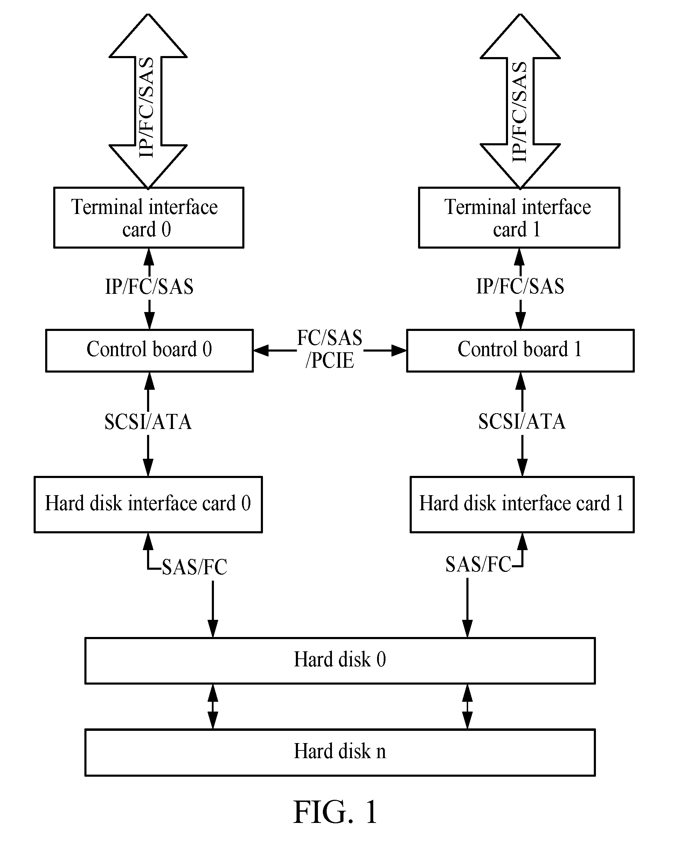

In the prior art, as shown in FIG. 1, a terminal interface card is connected with a terminal. When the terminal interface card receives a request from the terminal, the terminal interface card submits the request to be processed by a control board. The control board also performs the inter-board communication with another control board through an inter-board channel. The control board also needs to store read-write data into a hard disk via a hard disk interface card. A channel connecting the terminal interface card with the terminal is an Internet Protocol (IP) Address or a Fiber Channel (FC) or a Serial Attached SCSI (SAS). A channel connecting the terminal interface card with the control board is an IP or an FC or an SAS. A channel connecting the control board with the hard disk interface card is an SCSI or an Advanced Technology Attachment (ATA). A channel connecting the hard disk interface card with the hard disk is an FC or an SAS. The inter-board channel is an FC or an SAS or a Peripheral Component Interconnection Express (PCIE).

During the process of implementation of the present invention, it is found that the prior art has at least the following problems.

The most service processing operations are performed by the control board, so the efficiency of use for the control board is reduced. Furthermore, as the processing rates of the terminal interface card and the hard disk interface card are raised, the processing capacity of the control board also needs to be raised significantly. In addition, many types of terminal interface cards and hard disk interface cards are available, and the protocols carried by them are very complicated, resulting in the complicated software design of the control board. If the terminal interface card and the hard disk interface card is required to carry new protocols that newly appear, the software of the control board must be updated on a large scale once more.

### SUMMARY OF THE INVENTION

Embodiments of the present invention provide a storage method and system, a terminal service board, a control board, and a storage channel board, so as to reduce the influence of an interface board to the control board.

One aspect of the present invention provides a storage system, which includes a terminal service board, a control board, and a storage channel board.

The terminal service board is configured to be connected with a terminal and the control board, process a request from the terminal, and send a processing result to the control board.

The control board is configured to encapsulate data required to be stored onto a storage apparatus into a command based on the processing result, and submit the command to the storage channel board.

The storage channel board is configured to be connected with the storage apparatus and the control board, and according to the command, store onto the storage apparatus the data required to be stored onto the storage apparatus.

Another aspect of the present invention provides a terminal service board, where the terminal service board is connected with a terminal and a control board, and includes a first processing module and a first sending module.

The first processing module is configured to process a request from the terminal.

The first sending module is configured to send a processing result to the control board.

Another aspect of the present invention also provides a control board, where the control board is connected with a terminal service board and a storage channel board, and includes a second processing module, a generating module, and a second sending module.

The second processing module is configured to perform relevant processing base on a processing result of the request from the terminal, where the request from the terminal is processed by the terminal service board.

The generating module is configured to encapsulate data processed by the second processing module into a command.

The second sending module is configured to send the command to the storage channel board, so that the storage channel board stores the data onto the storage apparatus according to the command.

Another aspect of the present invention also provides a storage channel board, where the storage channel board is connected with a control board and a storage apparatus, and includes a third processing module and a control module.

The third processing module is configured to parse a command from the control board.

The control module is configured to control the storage apparatus, and store the parsed data onto the storage apparatus.

Another aspect of the present invention provides a storage method, which includes the following steps.

A processing result is received from a terminal service board.

A relevant processing is performed according to the processing result, so that correlated data required to be stored onto a storage apparatus is encapsulated into a command.

The command is sent to a storage channel board, so that the correlated data required to be stored onto the storage apparatus is stored through the storage channel board onto the storage apparatus.

In the technical solutions according to the present invention, the terminal service board processes the request from the terminal correspondingly, so that the control board is more focused on the storage processing, thus improving the efficiency of using the control board. Furthermore, with the use of the interaction between the command interface and the control board, the influence of the interface card protocol to the control board is reduced significantly. When a new interface card protocol appears, the control board does not need to perform relevant processing, so that the design of the control board is simplified.

### BRIEF DESCRIPTION OF THE DRAWINGS

To make the technical solution of the present invention clearer, the accompanying drawings for illustrating the embodiments of the present invention or the prior art are outlined below. Apparently, the accompanying drawings are for the exemplary purpose only, and persons having ordinary skill in the art can derive other drawings from such accompanying drawings without creative effort.
FIG. 1 is a schematic view illustrating the connection of an interface card with a control board in the prior art;
FIG. 2 is a structural view of a storage system according to a first embodiment of the present invention;
FIG. 3 is a structural view of a storage device according to a second embodiment of the present invention;
FIG. 4 is a structural view of a storage device according to a third embodiment of the present invention;
FIG. 5 is a structural view of a storage device according to a fourth embodiment of the present invention;
FIG. 6 is a flow chart of a storage method according to a fifth embodiment of the present invention; and
FIG. 7 is a structural view of a storage system according to the first embodiment of the present invention.

### DETAILED DESCRIPTION OF THE EMBODIMENTS

The technical solution under the present invention is elaborated below with reference to the accompanying drawings. Evidently, the embodiments described below are for the exemplary purpose only, without covering all embodiments of the present invention. Those skilled in the art can derive other embodiments from the embodiments given herein without creative effort, and all such embodiments are covered in the protection scope of the present invention.

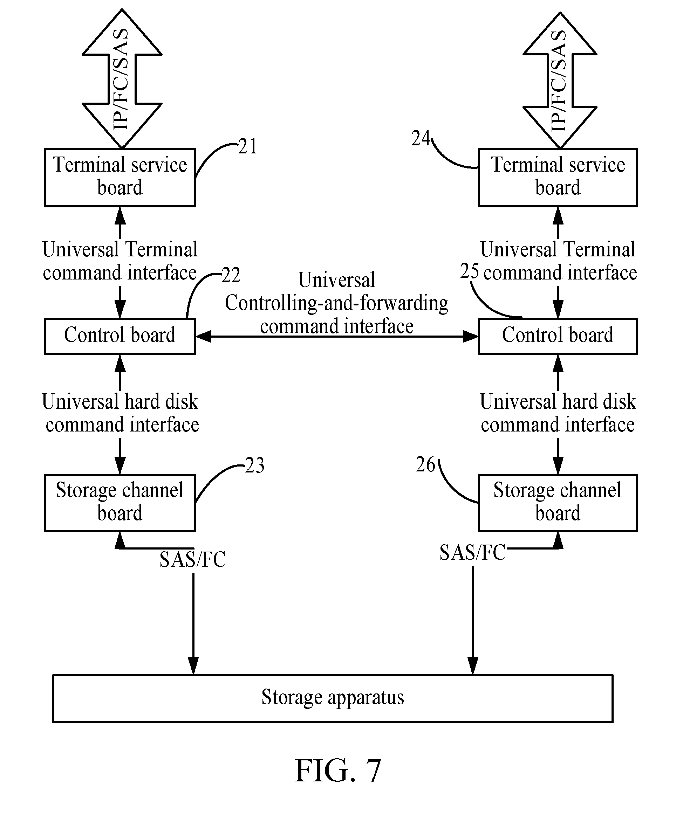

A first embodiment of the present invention provides a storage system. As shown in FIG. 7, the system according to this embodiment includes a terminal service board 21, a control board 22, and a storage channel board 23.

The terminal service board 21 is configured to be connected with a terminal and the control board 22, process a request from the terminal, and send a processing result to the control board 22 via a universal terminal command interface. For example, when the terminal sends an access request to a server, the terminal service board of the server processes the access request from the terminal, and the processing specifically includes, but is not limited to, resolving the access request command from the terminal, so that the server may respond to the access request from the terminal. After processing the access request from the terminal, the terminal service board 21 of the server submits the processing result of the access request to the control board 22 through the universal terminal command interface, so that the control board 22 performs relevant processing.

Specifically, a channel connecting the terminal service board 21 with the terminal includes, but is not limited to, an IP channel, an FC channel, and a SAS channel. A channel connecting the terminal service board 21 with the control board 22 includes, but is not limited to, a universal terminal command interface.

The control board 22 is configured to receive the processing result from the terminal service board 21, perform corresponding processing according to the processing result, and store the correlated data processed by the control board 22 onto a storage apparatus via the storage channel board 23. In the embodiment of the present invention, the storage apparatus may be a hard disk frame, that is, an array formed by hard disks, or other flash memory medium, or a device or an apparatus having storage functions. For example, the access request from the terminal is backup processed according to the processing result of the access request from the terminal, and the backuped data is stored onto the storage apparatus via the storage channel board; and/or the access request from the terminal is snapshot processed according to the processing result of the access request from the terminal, and the snapshot page is stored onto the storage apparatus via the storage channel board. The relevant storage operations performed on the access request from the terminal according to the processing result of the access request from the terminal are not limited to the backup operation and the snapshot operation, and related operations are performed based on the actual requirement. In this embodiment, the control board 22 encapsulates the correlated data required to be stored onto the storage apparatus into a command, and sends the command to the storage channel board 23, so that the storage channel board 23 performs the relevant storage operations according to the command. In this embodiment, the data required to be stored onto the storage apparatus is data processed by the control board 22. In this embodiment, the storage channel board 23 is a channel board corresponding to the storage apparatus. If the storage apparatus is a hard disk, the storage channel board 23 is a channel board corresponding to the hard disk.

Specifically, the control board 22 may also be connected with another control board through a universal controlling-and-forwarding command interface, and in this embodiment, the other control board is exemplified by a control board 25. The control board 25 is connected with a terminal service board 24 and a storage channel board 26 respectively, and the interactive process is the same as the interactive process of the terminal service board 21, the control board 22, and the storage channel board 23, so the details are not repeated herein.

The storage channel board 23 is configured to be connected with the storage apparatus and the control board 22, and control the storage apparatus. After receiving the command from the control board 22, the storage channel board 23 parses the command, and stores onto the storage apparatus the correlated required-to-be-stored data on the control board 22 according to the parsed command. In this embodiment, when the terminal has the request to access the storage apparatus, the storage channel board 23 also processes the request for accessing the storage apparatus, for example, the terminal can acquire data needed by the terminal from the storage apparatus.

Specifically, the channel connecting the storage channel board 23 with the storage apparatus includes, but is not limited to, an FC channel and an SAS channel. The channel connecting the storage channel board 23 with the control board 22 includes, but is not limited to, a universal hard disk command interface.

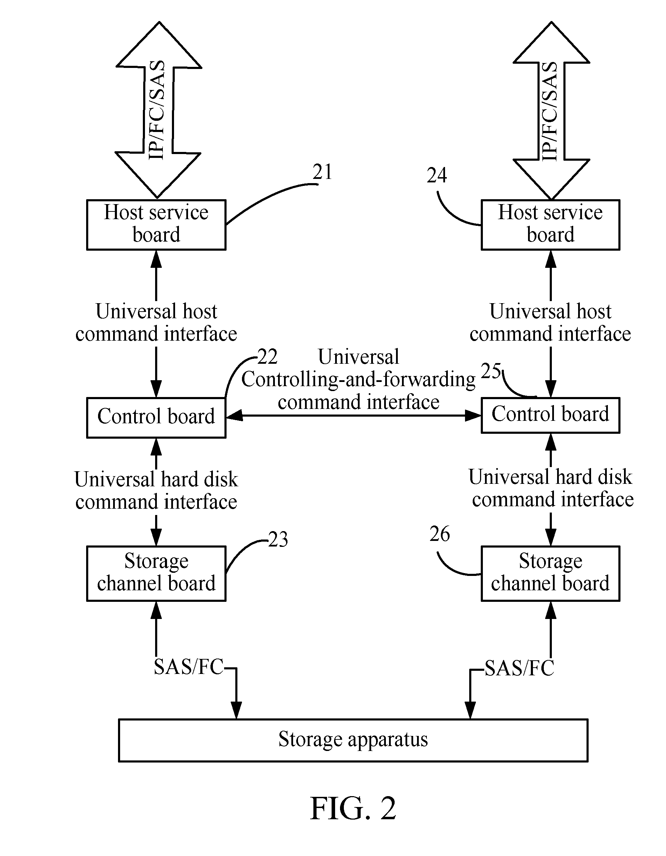

In another embodiment, as shown in FIG. 2, the control board 22 may also be connected with a host service board 21 via a universal host command interface, and the control board 25 may also be connected with a host service board 24 via a universal host command interface.

In this embodiment, it is obvious that the control board becomes more focused on the storage processing with the use of the terminal service board to process the request from the terminal correspondingly, thereby improving the efficiency of use for the control board. Furthermore, with the use of the interaction between the command interface and the control board, the influence of the interface card protocol to the control board is reduced significantly. When a new interface card protocol appears, the control board does not need to perform relevant processing, so that the design of the control board is simplified.

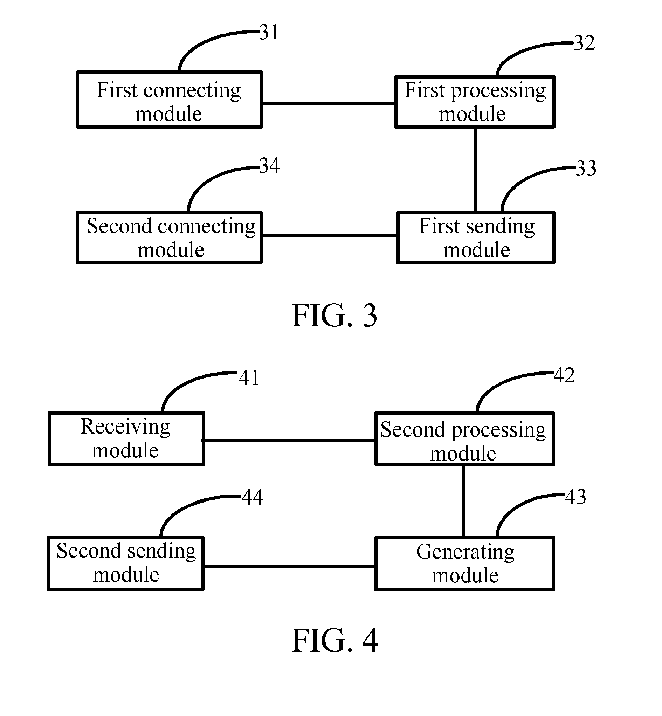

A second embodiment of the present invention provides a terminal service board. As shown in FIG. 3, the terminal device according to this embodiment includes a first connecting module 31, a first processing module 32, a first sending module 33, and a second connecting module 34.

The first connecting module 31 is configured to be connected with a terminal through a connecting channel which includes, but is not limited to, an IP channel, an FC channel, and an SAS channel, and forward a request from the terminal to the first processing module 32.

The first processing module 32 is configured to process the request from the terminal forwarded by the first connecting module 31. The processing specifically includes, but is not limited to, resolving the access request command from the terminal, so that the server may respond to the access request from the terminal.

The first sending module 33 is configured to send a processing result from the first processing module 32 to a control board connected with the second connecting module 34. Specifically, after the first processing module 32 has processed the access request from the terminal, the first sending module 33 submits the processing result of the access request to the control board via a universal terminal command interface, so that the control board performs relevant processing.

The second connecting module 34 is configured to be connected with the control board through a connecting channel which includes, but is not limited to, a universal terminal command interface, and forward the processing result from the first sending module 33 to the control board according to the connecting channel.

In this embodiment, it is obvious that the control board becomes more focused on the storage processing with the use of the terminal service board to process the request from the terminal correspondingly, thereby improving the efficiency of use for the control board. Furthermore, with the use of the interaction between the command interface and the control board, the influence of the interface card protocol to the control board is reduced significantly. When a new interface card protocol appears, the control board does not need to perform relevant processing, so that the design of the control board is simplified.

A third embodiment of the present invention provides a control board. As shown in FIG. 4, the control board according to this embodiment includes a receiving module 41, a second processing module 42, a generating module 43, and a second sending module 44.

The receiving module 41 is configured to receive a processing result of the request from the terminal, where the request from the terminal is processed by a terminal service board.

The second processing module 42 is configured to perform corresponding processing according to the processing result received by the receiving module 41.

Specifically, the corresponding processing includes, but is not limited to, backup processing the access request from the terminal according to the processing result of the access request from the terminal, and/or snapshot processing the access request from the terminal according to the processing result of the access request from the terminal.

The generating module 43 is configured to encapsulate the data processed by the second processing module 42 into a command. In this embodiment, the data backup processed and/or the page data snapshot processed are encapsulated into a command. In other embodiments, the data encapsulated may be data which has gone through other processing.

The second sending module 44 is configured to send the command to a storage channel board via a universal hard disk command interface, so that according to the command, the storage channel board stores onto a storage apparatus the correlated data required to be stored onto the storage apparatus.

In this embodiment, it is obvious that the control board becomes more focused on the storage operation of data without the need of processing the request from the terminal correspondingly, thereby improving the efficiency of use for the control board.

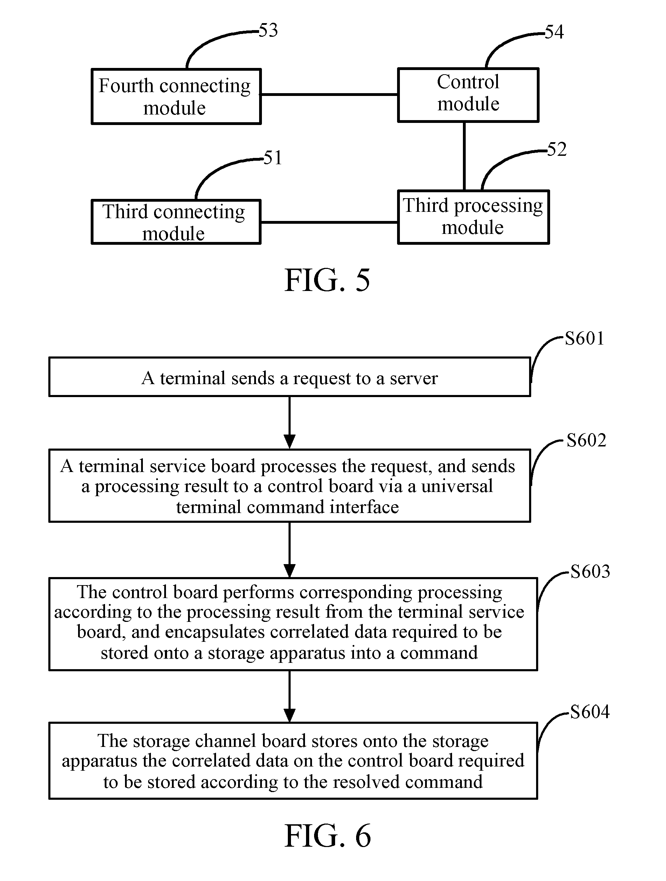

A fourth embodiment of the present invention provides a storage channel board. As shown in FIG. 5, the storage channel board according to this embodiment includes a third connecting module 51, a third processing module 52, a fourth connecting module 53, and a control module 54.

The third connecting module 51 is configured to be connected with a control board through a connecting channel which includes, but is not limited to, a universal hard disk command interface, and forward a command sent from the control board to the third processing module 52 via the connecting channel.

The third processing module 52 is configured to process the command from the control board connected with the third connecting module 51, and the processing specifically is resolving the command. In an embodiment, the parsed data is obtained after the command is parsed, that is, the correlated data on the control board required to be stored is obtained after the command is parsed.

The fourth connecting module 53 is configured to be connected with a storage apparatus through a connecting channel which includes, but is not limited to an FC channel and an SAS channel.

The control module 54 is configured to control the storage apparatus connected with the fourth connecting module 53, and store the data parsed by the third processing module 52 onto the storage apparatus, that is, store onto the storage apparatus the correlated data on the control board required to be stored.

Furthermore, the fourth connecting module 53 is further configured to forward the correlated data required to be stored by the control module 54 to the storage apparatus according to the connecting channel.

In this embodiment, it is obvious that the control board becomes more focused on the storage processing with the use of the storage channel board to process the request from the terminal for accessing the storage apparatus correspondingly, thereby improving the efficiency of use for the control board. Furthermore, with the use of the interaction between the command interface and the control board, the influence of the interface card protocol to the control board is reduced significantly. When a new interface card protocol appears, the control board does not need to perform relevant processing, so that the design of the control board is simplified.

A fifth embodiment of the present invention provides a storage method. As shown in FIG. 6, the method according to this method includes the following steps.

In step S601, a terminal sends a request to a server. The request includes, but is not limited to, an access request and a download request.

In step S602, a terminal service board of the server processes the request from the terminal, and sends a processing result to a control board via a universal terminal command interface. For example, when the terminal sends the access request to the server, the terminal service board of the server processes the access request from the terminal, and the processing specifically includes, but is not limited to, resolving the access request command from the terminal, so that the server may respond to the access request from the terminal. After processing the access request from the terminal, the terminal service board of the server submits the processing result of the access request to the control board through the universal terminal command interface, so that the control board performs relevant processing.

Specifically, the terminal service board is connected with the terminal through a connecting channel which includes, but is not limited to, an IP channel, an FC channel, and an SAS channel. The terminal service board is also connected with the control board through a connecting channel which includes, but is not limited to a universal terminal command interface.

In step S603, the control board performs corresponding processing according to the processing result from the terminal service board, encapsulates correlated data required to be stored onto a storage apparatus into a command, and submits the command to a storage channel board via a universal hard disk command interface, so that the storage channel board stores the correlated data onto the storage apparatus.

Specifically, the corresponding processing includes, but is not limited to, backup processing the access request from the terminal according to the processing result of the access request from the terminal, and storing the backuped data onto the storage apparatus via the storage channel board; and/or snapshot processing the access request from the terminal according to the processing result of the access request from the terminal, and storing the snapshot page onto the storage apparatus via the storage channel board.

In step S604, the storage channel board receives the command from the control board, parses the command, and stores the parsed data onto the storage apparatus, that is, stores onto the storage apparatus the correlated data on the control board required to be stored.

Specifically, the storage channel board is connected with the storage apparatus and the control board. A channel connecting the storage channel board with the storage apparatus includes, but is not limited to, an FC channel and an SAS channel. A channel connecting the storage channel board with the control board includes, but is not limited to, a universal hard disk command interface.

In the embodiment of the present invention, it is obvious that the control board becomes more focused on the storage processing with the use of the terminal service board to process the request from the terminal correspondingly, thereby improving the efficiency of using the control board. Furthermore, with the use of the interaction between the command interface and the control board, the influence of the interface card protocol to the control board is reduced significantly. When a new interface card protocol appears, the control board does not need to perform relevant processing, so that the design of the control board is simplified.

Through the above description of the embodiments, it is apparent to persons skilled in the art that the present invention may be accomplished by hardware, and may also be accomplished by software on necessary universal hardware platform. Therefore, the technical solution of the present invention can be embodied in the form of a software product. The software product may be stored in a non-volatile storage medium (for example, a CD-ROM, a USB flash drive, or a removable hard disk), and contains several instructions used for instructing a computer equipment (for example, a personal computer, a server, or a network equipment) to perform the method described in the embodiments of the present invention.

The above descriptions are merely some exemplary embodiments of the present invention. It should be noted that persons of ordinary skill in the art may make several improvements and modifications without deviating from the principle of the present invention, and the improvements and modifications shall fall within the protection scope of the present invention.

## Claims

1. A storage system, comprising a terminal service board, a control board, and a storage channel board, wherein:
the terminal service board is configured to be connected with a terminal and the control board, process a request from the terminal, and send a processing result to the control board;
the control board is configured to encapsulate data required to be stored onto a storage apparatus into a command according to the processing result, and submit the command to the storage channel board; and
the storage channel board is configured to be connected with the storage apparatus and the control board, and according to the command, store onto the storage apparatus the data required to be stored onto the storage apparatus.

2. The system according to claim 1, wherein the terminal service board comprises:
a first processing module, configured to process the request from the terminal; and
a first sending module, configured to send a processing result from the first processing module to the control board.

3. A terminal service board, connected with a terminal and a control board, comprising:
a first processing module, configured to process a request from the terminal; and
a first sending module, configured to send a processing result from the first processing module to the control board.

4. The terminal service board according to claim 3, further comprising:
a first connecting module, configured to be connected with the terminal, and forward the request from the terminal to the first processing module; and
a second connecting module, configured to be connected with the control board via a universal terminal command interface, and forward the processing result from the first sending module to the control board according to the universal terminal command interface.

5. A control board, connected with a terminal service board and a storage channel board, comprising:
a second processing module, configured to perform corresponding processing according to a processing result of the request from the terminal, wherein the request from the terminal is processed by the terminal service board;
a generating module, configured to encapsulate data processed by the second processing module into a command; and
a second sending module, configured to send the command to the storage channel board, so that the storage channel board stores the data onto the storage apparatus according to the command.

6. The control board according to claim 5, further comprising:
a receiving module, configured to receive the processing result of the request from the terminal, wherein the request from the terminal is processed by the terminal service board.

7. A storage channel board, connected with a control board and a storage apparatus, comprising:
a third processing module, configured to parse a command from the control board, so as to obtain parsed data; and
a control module, configured to control the storage apparatus, and store the parsed data onto the storage apparatus.

8. The storage channel board according to claim 7, further comprising:
a third connecting module, configured to be connected with the control board, and forward the command from the control board to the third processing module; and
a fourth connecting module, configured to be connected with the storage apparatus, and forward data required to be stored to the storage apparatus.

9. A storage method, comprising:
receiving a processing result from a terminal service board;
performing corresponding processing according to the processing result, and encapsulating correlated data required to be stored onto a storage apparatus into a command; and
sending the command to a storage channel board, so that the data required to be stored onto the storage apparatus is stored onto the storage apparatus through the storage channel board.

10. The method according to claim 9, wherein the step of the processing result from the terminal service board comprises the result obtained from the processing of a request from a terminal, wherein the request from the terminal is processed by the terminal service board.
